# EUROPÄISCHE PATENTSCHRIFT

(11) **EP 1 263 625 B1**
(45) Veröffentlichungstag und Bekanntmachung des Hinweises auf die Patenterteilung: **14.09.2005**
(21) Anmeldenummer: 01916896.2
(22) Anmeldetag: 05.03.2001
(51) Int. Cl.: B60Q 1/30, B60Q 1/52, H04N 7/18, B60R 11/04

(54) **KAMERAVORRICHTUNG UND BREMSWARNLEUCHTE ALS INTEGRIERTE EINHEIT**
CAMERA AND BRAKE-SYSTEM WARNING LIGHT CONFIGURED AS AN INTEGRATED UNIT
DISPOSITIF DE CAMERA ET LAMPE DE FREIN COMME UNITE INTEGREE

(30) Priorität: 03.03.2000 DE 10010434
(43) Veröffentlichungstag der Anmeldung: 11.12.2002
(73) Patentinhaber: ROBERT BOSCH GMBH, 70442 Stuttgart (DE)
(72) Erfinder: POECHMUELLER, Werner, 31139 Hildescheim (DE)
(86) Internationale Anmeldenummer: PCT/DE2001/000816
(87) Internationale Veröffentlichungsnummer: WO 2001/064477

(56) Entgegenhaltungen:
- WO-A-97/01246
- WO-A-99/62741
- DE-A- 19 801 884
- US-A- 5 121 200
- US-A- 5 699 057

## Beschreibung

### Stand der Technik

Die Erfindung geht aus von einem Fahrzeug mit einer Kameravorrichtung und einem Verfahren zur Überwachung des rückwärtigen Fahrraums nach der Gattung der unabhängigen Ansprüche. Es sind zur Überwachung des rückwärtigen Fahrraums bereits Ultraschallsensoren bekannt, die an einem rückwärtigen Stoßfänger eines Fahrzeugs angeordnet sind und die die Messung eines Abstands zu Hindernissen ermöglichen. Einem Benutzer können jedoch hierdurch nur Abstandswerte signalisiert werden. Ferner ist es bekannt, zur Erleichterung des Ankoppelns eines Anhängers eine Kamera am Ende eines Anhängers eines Lastkraftwagens oder eines Aufliegers anzuordnen, um dem Fahrer ein Bild für das Ankoppeln des Anhängers zu liefern. Ferner ist es bekannt, bei Personenkraftwagen Kameras in einer Umgebung der Stoßfänger ähnlich den Positionen der Ultraschallsensoren zu integrieren. Aus der WO 97/01246 ist ein Fahrzeugkamerasystem bekannt, bei dem in Rückleuchten, die in der Nähe des Fahrzeugdaches montiert sind, Kameravorrichtungen zur Beobachtung des rückwärtigen Fahrraums angebracht sind.

### Vorteile der Erfindung

Das erfindungsgemäße Fahrzeug und das erfindungsgemäße Verfahren mit den Merkmalen der unabhängigen Ansprüche haben demgegenüber den Vorteil, dass die Kameravorrichtung durch die Anordnung an der dritten Bremswarnleuchte wesentlich höher am Fahrzeug angeordnet ist als eine Kamera, die sich in der Höhe eines Stoßfängers befindet. Durch die größere Höhe ergibt sich für die Kamera ein größerer Blickwinkel. Hierdurch können bereits weiter entfernte Hindernisse durch die Kamera aufgenommen werden gegenüber einer Anordnung im Bereich der Stoßfänger. Eine Position an der Heckscheibe ist insbesondere bei Fahrzeugen vorteilhaft, bei denen die Heckscheibe ungefähr das Fahrzeugende darstellt und kein Kofferraum zwischen der Heckscheibe und dem Fahrzeugende angeordnet ist, so z. B. bei sogenannten Vans oder sogenannten Kombi-Fahrzeugen mit einem gegenüber einer Limousine vergrößerten Ladebereich.

Als weiterer Vorteil ist anzusehen, dass die Kamera an der dritten Bremswarnleuchte sehr unauffällig angeordnet werden kann. Ferner ist vorteilhaft, dass die Kameravorrichtung bei der Montage der dritten Bremswarnleuchte, die in vielen Ländern Vorschrift ist, mit montiert wird, ohne dass hierdurch ein zusätzlicher Montageschritt für eine Montage der Kameravorrichtung erforderlich wird.

Besonders vorteilhaft ist es, die Kameravorrichtung mit der dritten Bremswarnleuchte in einem Bereich an der Heckscheibe des Fahrzeugs vorzusehen und an dem Fahrzeug zumindest für diesen Bereich der Heckscheibe einen Scheibenwischer anzuordnen, durch den die Heckscheibe der Kamera reinigbar ist. Hierdurch wird vermieden, dass durch vor das Objektiv der Kameravorrichtung aufgebrachten Schmutz eine Darstellung des rückwärtigen Fahrraums in einer Anzeige beeinträchtigt oder verhindert wird. Sollte sich die Bildqualität verschlechtern kann der Scheibenwischer ausgelöst werden, vorzugsweise automatisch, um die Heckscheibe vor dem Objektiv der Kamera zu reinigen. Dies kann durch einen Sensor erfolgen, der die Reflexion des Bremslichtes an der Scheibe misst und bei einer zu starken Reflexion auf Schmutz schließt und den Scheibenwischer auslöst. Ferner kann auch durch eine Analyse des empfangenen Bildes, ob Störungen vorliegen, eine automatische Betätigung des Scheibenwischers ausgelöst werden.

Insbesondere ist vorteilhaft, neben der Betätigung des Scheibenwischers auch an der Heckscheibe angeordnete Spritzdüsen auszulösen, die eine Reinigungsflüssigkeit auf die Scheibe geben, mit Hilfe der die Scheibe befeuchtet und gereinigt wird. Hierbei ist insbesondere vorteilhaft, die Reinigungsdüse so anzuordnen, dass vor allem der Bereich vor der Kamera besonders gut mit Reinigungsflüssigkeit benetzt wird, so dass in diesem Bereich eine besonders hohe Reinigungswirkung erzielt werden kann. Insbesondere ist vorteilhaft, bei einem Einlegen des Rückwärtsgangs automatisch eine Reinigung der Heckscheibe auszulösen, vor allem im Bereich der Kameravorrichtung. Weiterhin kann eine Reinigung bei einer Aktivierung der Kameravorrichtung durch den Fahrer ausgelöst werden, z.B. wenn der Fahrer einen rückwärtigen Einparkvorgang beginnen will. Insbesondere ist es vorteilhaft, eine mehrfache Reinigung in kurzer Zeitfolge durch den Scheibenwischer und/oder das Aufbringen von Reinigungsflüssigkeit durch eine zeitgesteuerte Unterdrückungsschaltung zu verhindern.

Weiterhin ist es vorteilhaft, eine gemeinsame Spannungsversorgung für die Kameravorrichtung und die Bremswarnleuchte vorzusehen, um z. B. durch das Fahrzeugdach zu verlegende Leitungen einzusparen. Dabei ist es insbesondere vorteilhaft, dass die für die dritten Bremsleuchten üblichen Beleuchtungsmittel, z. B. Leuchtdioden, und Kameravorrichtungen für ihren Betrieb eine elektrische Spannung benötigen, die unter den üblichen Bordspannungen von Fahrzeugen liegen. Eine Wandlung der Spannung auf einen Wert in einem bevorzugten Bereich von 4 bis 8 Volt kann daher gemeinsam für die Bremswarnleuchte und die Kameravorrichtung vorzugsweise außerhalb eines Gehäuses der Bremswarnleuchte erfolgen.

Es ist weiterhin vorteilhaft, dass durch eine Anordnung von zwei Kameravorrichtungen aufgenommene Bildsignale stereoskopisch auswertbar sind und hierdurch einem Benutzer in einer Anzeige Entfernungen zu einzelnen Hindernissen bei einer rückwärtigen Fahrt eingeblendet werden können.

Es ist weiterhin vorteilhaft, die Kameravorrichtung und die Bremswarnleuchte in einem Gehäuse anzuordnen, da hierdurch ein unauffälligeres und ansprechenderes Design gegenüber einer Anordnung einer Kameravorrichtung als separates Bauteil möglich ist. Insbesondere ist es vorteilhaft, auch einen Scheibenwischer und/oder Spritzdüsen an dem Gehäuse anzuordnenn, da hierdurch einerseits eine Montage der genannten Teile in einem Arbeitsschritt erfolgen kann und andererseits eine optimale Positionierung der Reinigungsvorrichtungen, auch bei einem nachgerüsteten Einbau, erfolgt.

### Zeichnung

Ausführungsbeispiele der Erfindung sind in der Zeichnung dargestellt und in der nachfolgenden Beschreibung näher erläutert. Es zeigen Figur 1 eine Ansicht einer Rückseite eines Fahrzeugs mit einer erfindungsgemäßen Kameravorrichtung an einer dritten Bremswarnleuchte, Figur 2 eine Ansicht einer Heckscheibe eines Fahrzeugs mit zwei weiteren Ausführungen einer erfindungsgemäßen Kameravorrichtung, Figuren 3a, 3b und 3c zeigen erfindungsgemäße Ausgestaltungen einer oder mehrerer Kameravorrichtungen an einer Bremswarnleuchte, Figur 4 einen Schnitt durch eine Bremswarnleuchte in einer Seitenansicht mit einer erfindungsgemäßen Kameravorrichtung, Figur 5 einen Schnitt durch eine Bremswarnleuchte in einer Aufsicht, Figur 6 ein Schaltbild für eine erfindungsgemäße Kameravorrichtung und eine Bremswarnleuchte.

### Beschreibung des Ausführungsbeispiels

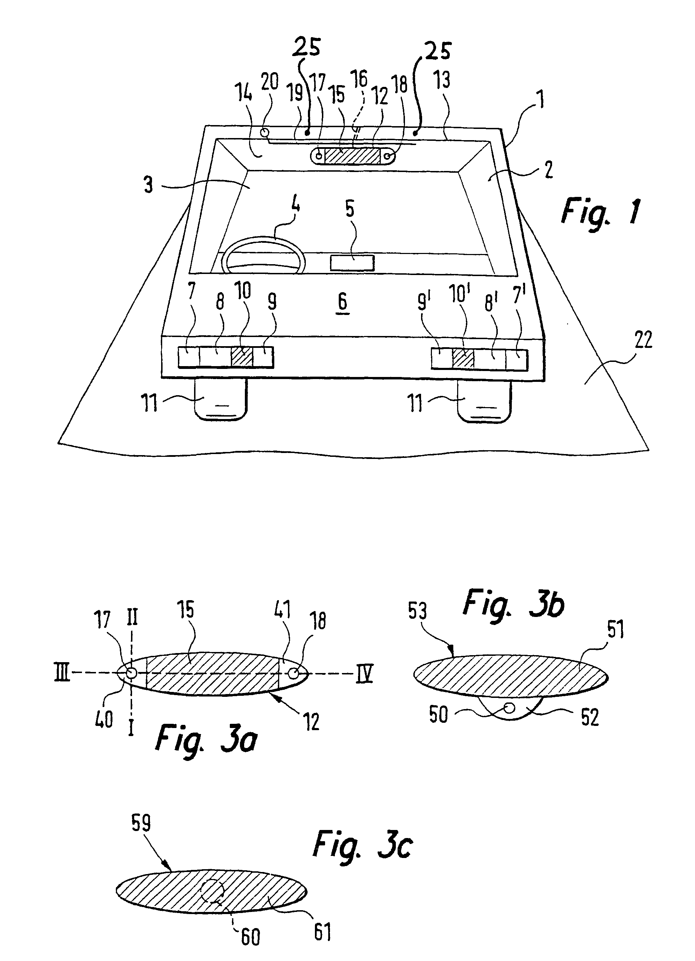

Die Kameravorrichtung kann erfindungsgemäß für eine Vielzahl von Fahrzeugen verwendet werden, so z. B. Lastkraftwagen, Schienenfahrzeuge oder Busse. Das Ausführungsbeispiel ist anhand einer Verwendung in einem Personenkraftwagen erläutert. In der Figur 1 ist ein Kraftfahrzeug 1 aus einer rückwärtigen Ansicht dargestellt. Durch eine Heckscheibe 2 hindurch ist eine Windschutzscheibe 3, ein Lenkrad 4 und eine Anzeigeeinheit 5 sichtbar. Die Heckscheibe 2 ist in einer Heckklappe 6 des Kraftfahrzeugs 1 angeordnet. Unterhalb der Heckklappe 6 befindet sich die rückwärtige Fahrzeugbeleuchtung mit Blinkern 7, 7', Rückleuchten 8, 8', Rückfahrleuchten 9, 9' und Bremswarnleuchten 10, 10'. Die Fahrzeugbeleuchtung ist spiegelsymmetrisch auf beiden Fahrzeugseiten links und rechts angeordnet. Das Kraftfahrzeug 1 erhebt sich auf Reifen 11 über einer Fahrbahn 22, auf der das Fahrzeug fährt und die damit den Fahrweg des Fahrzeugs darstellt. Eine dritte Bremswarnleuchte 12 weist dabei einen größeren Abstand zu der Fahrbahn 22 auf, als die erste und die zweite Bremswarnleuchte 10, 10'. Die dritte Bremswarnleuchte 12 ist an einer oberen Kante 13 der Heckscheibe 2 angeordnet. An die obere Kante 13 schließt ein Fahrzeugdach 14 an. Die dritte Bremswarnleuchte 12 weist eine leuchtende Fläche 15 auf, die bei einer Betätigung der in der Figur 1 nicht dargestellten Fahrzeugbremse ebenso aufleuchtet wie die erste und die zweite Bremswarnleuchte 10, 10'. Die dritte Bremswarnleuchte 12 ist an Leitungen 16 zur Stromversorgung angeschlossen, die aus dem Fahrzeugdach 14 in die dritte Bremswarnleuchte 12 geführt sind. An der dritten Bremswarnleuchte 12 sind an einer ersten Seite eine erste Kamera 17 und an einer zweiten Seite eine zweite Kamera 18 angeordnet. An der Heckscheibe 2 ist ein Scheibenwischer 19 angeordnet, der an einer Halterung 20 befestigt ist. Durch den Scheibenwischer 19 ist die Heckscheibe 2 vor der ersten Kamera 17 und der zweiten Kamera 18 reinigbar. Im Bereich der oberen Kante 13 der Heckscheibe 2 sind vorzugsweise in der Nähe der ersten und zweiten Kameravorrichtung 17, 18 Spritzdüsen 25 angeordnet, mit denen eine Reinigungsflüssigkeit auf die Heckscheibe 2 gegeben werden kann. Bei einer Bewegung des Scheibenwischers 19 wird die Reinigungsflüssigkeit über die Heckscheibe 2 verteilt, so dass die Heckscheibe 2 mit der Reinigungsflüssigkeit benetzt wird und dabei mechanisch durch den Scheibenwischer 19 gereinigt wird.

Der rückwärtige Fahrraum hinter dem Kraftfahrzeug 1 ist durch die erste Kamera 17 und die zweite Kamera 18 erfassbar, die hinter der Heckscheibe 2 angeordnet sind. Über die Leitungen 16 werden die erfassten Bildsignale an eine in der Figur 1 nicht dargestellte Auswerteeinheit weitergeleitet, die vorzugsweise in einem Dashboard des Kraftfahrzeugs 1 angeordnet ist, und werden in der Anzeigeeinheit 5 einem Fahrer und/oder einem Beifahrer in dem Kraftfahrzeug angezeigt. Sollte die Bildqualität durch Verschmutzung der Heckscheibe 2 nachlassen, so kann der Scheibenwischer 19 vorzugsweise automatisch betätigt werden und die Heckscheibe 2 vor der ersten Kamera 17 und der zweiten Kamera 18 reinigen. Zusätzlich zu der automatischen Betätigung des Scheibenwischers 19 können automatisch die Spritzdüsen 25 Reinigungsflüssigkeit auf die Heckscheibe 2 geben. Die Reinigungsflüssigkeit wird den Spritzdüsen vorzugsweise über parallel zu den Leitungen 16 verlaufende Zuführungen entlang des Fahrzeugdaches aus einem Vorratsbehälter im Bereich des Kofferraums oder des Motorraums des Fahrzeugs zugeführt. Die Reinigungsflüssigkeit kann z. B. alkoholhaltig sein, so dass auch eine sich möglicherweise auf der Heckscheibe niederschlagende Vereisung mit einem Aufbringen der Reinigungsflüssigkeit entfernt werden kann. Die Reinigungsflüssigkeit wird vorzugsweise vor dem Aufbringen auf die Heckscheibe 2 über in der Zeichnung nicht dargestellte, an den Spritzdüsen angeordnete Heizvorrichtungen erwärmt. Eine Erfassung der Verschmutzung kann einerseits mittels einem in oder an der Bremswarnleuchte 12 angeordneten Sensors erfasst werden, mit dem die z.B. die Lichtdurchlässigkeit der Heckscheibe bestimmt werden kann. Auch kann z.B. mit einer Auswertung des von der Kameravorrichtung erfassten Bildes eine automatische Betätigung des Scheibenwischers 19 und/oder der Spritzdüsen 25 ausgelöst werden, wenn keine Strukturen mehr in dem ermittelten Bild erfaßbar sind bzw. wenn die Heckklappe 6 von der Kameravorrichtung nicht mehr oder nur noch mit Störungen erkannt wird. Ein Schwellwert für die Feststellung, dass eine Störung vorliegt, ist dabei vorzugsweise von den Lichtverhältnissen abhängig, so dass für gutes und schlechtes Umgebungslicht (tags/nachts) unterschiedliche Schwellwerte gespeichert sind. Ferner kann eine Betätigung des Scheibenwischers 19 und/oder der Spritzdüsen 25 ausgelöst werden, wenn mit einem in der Figur 1 nicht dargestellten Gangwahlhebel ein Rückwärtsgang eingestellt wird. Die Spritzdüsen 25 können insbesondere so in der Nähe der Kameravorrichtung angeordnet sein, dass bei einer vorgebbaren Dosierung gerade so viel Reinigungsmittel auf die Heckscheibe 2 aufgebracht wird, dass auch ohne eine Bewegung des Scheibenwischers 19 zumindest gerade der Bereich im Sichtfeld der Kamera gereinigt wird. Durch die Reinigungsflüssigkeit, die vorzugsweise in einer geringen, auf die Fläche der Heckscheibe 2 vor der Kameravorrichtung bemessenen Menge aufgebracht wird, wird aufgrund der Nähe der Kamera zu der Heckscheibe eine optische Darstellung nicht gestört. In einem ersten Ausführungsbeispiel wird eine einmalige Reinigung der Heckscheibe durchgeführt. Vorteilhaft wird eine mehrfache Reinigung innerhalb kurzer Zeit unterdrückt, z.B. während eines Einparkvorgangs, bei dem mehrfach zwischen Vorwärts- und Rückwärtsgang gewechselt wird. Es ist hierzu eine zeitgesteuerte Unterdrückungsschaltung vorgesehen, die eine Reinigung zunächst für eine vorgegebene Zeit sperrt, z.B. für zwei Minuten. Erst nach Ablauf dieser Zeit erfolgt wieder eine automatische Aktivierung der Reinigung bei einem erneuten Einlegen des Rückwärtsgangs oder einer erneuten Aktivierung der Kameravorrichtung. In einem weiteren Ausführungsbeispiel ist es möglich, eine erneute Reinigung an einen vorgegebenen Geschwindigkeitswert des Fahrzeugs zu koppeln, z.B. 30 km/h, der erst nach Beendigung eines Einparkvorgangs wieder erreicht wird. Damit wird eine Reinigung erst dann wieder automatisch aktiviert, wenn zwischen der ersten Auslösung und einer erneuten Auslösung entweder der vorgegebene Geschwindigkeitswert des Fahrzeugs überschritten oder ein Antrieb des Fahrzeugs abgestellt wurde. Der vorgegebene Geschwindigkeitswert ist dabei so zu wählen, dass er knapp oberhalb bei Einparkvorgängen üblicherweise auftretenden Fahrzeuggeschwindigkeiten liegt.

Die dritte Bremswarnleuchte 12 ist vorzugsweise durch Kleben an der Heckscheibe 2 befestigt. Ferner ist es auch möglich, die Leitungen 16 starr auszuführen bzw. die Leitungen 16 in einen starren Träger zu integrieren und somit die dritte Bremswarnleuchte 12 über die Leitungen 16 bzw. den Träger an dem Fahrzeugdach 14 zu befestigen. Durch die Verwendung von zwei Kameras 17, 18 ist durch eine Auswerteeinheit eine stereoskopische Bildauswertung durch Übereinanderlegen der erfassten Bilder und Berechnung des Bildversatzes möglich, sodass einem Benutzer in der Anzeigeeinheit 5 Entfernungen zu von der ersten und der zweiten Kamera 17, 18 gemeinsam erfassten Objekten angezeigt werden können. In einem bevorzugten Ausführungsbeispiel sind die erste und die zweite Kamera 17, 18 als Videokameras ausgeführt und übertragen ein bewegtes Bild des Fahrraums. Ferner ist es auch möglich, Standbilder in einem schnellen Wechsel zu übertragen.

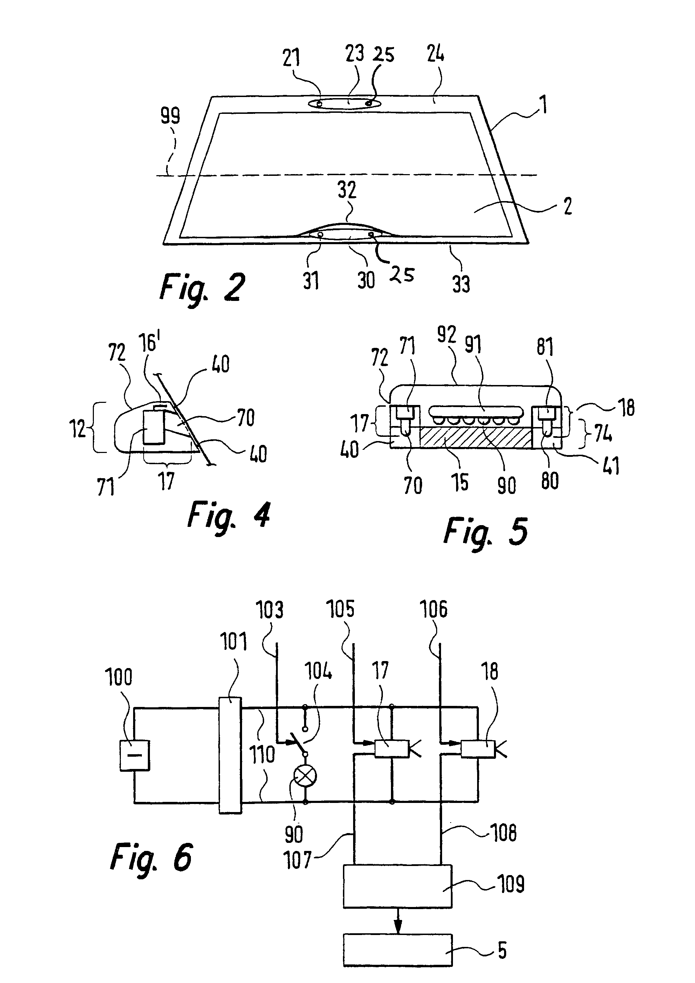

In der Figur 2 sind zwei alternative Anordnungsmöglichkeiten für eine dritte Bremswarnleuchte in einer oberen und unteren Hälfte der Heckscheibe 2 eines Kraftfahrzeugs 1 getrennt durch eine gestrichelte Linie 99 dargestellt. In einem ersten Ausführungsbeispiel ist eine dritte Bremswarnleuchte 23 mit einer Kameravorrichtung 21 in einem oberen Rand 24 z. B. einer Rückklappe des Kraftfahrzeugs 1 angeordnet, der sich an die Heckscheibe 2 anschließt (oberhalb der gestrichelten Linie 99). Weiterhin ist es möglich, eine dritte Bremswarnleuchte 30 mit einer Kameravorrichtung 31 in einer Auswölbung 32 eines unteren Randes 33 der Heckscheibe 2 anzuordnen (unterhalb der gestrichelten Linie 99). Bei der in der Figur 2 dargestellten Anordnung muss die dritte Bremswarnleuchte 23, 30 nicht hinter der Heckscheibe 2 angeordnet sein. Damit ist eine Oberflächengestaltung der dritten Bremswarnleuchte 23 nicht durch die Oberfläche der Heckscheibe 2 vorgegeben. Jedoch kann die dritte Bremswarnleuchte 23, 30 hinter der Heckscheibe 2 angeordnet, muss jedoch nicht mit dieser kontaktiert werden. In einem bevorzugten Ausführungsbeispiel sind eine Spritzdüse 25 zum Aufbringen einer Reinigungsflüssigkeit mit in ein Gehäuse der dritten Bremswarnleuchte 23, 30 integriert. Hierdurch kann eine Reinigung räumlich nah zu der Kameravorrichtung 21, 31 erfolgen, so dass nur wenig Reinigungsflüssigkeit verwendet werden muss. In einem in der Zeichnung nicht dargestellten Ausführungsbeispiel ist der Scheibenwischer mit an der Bremswarnleuchte 21, 31 angeordnet.

In der Figur 3a ist die dritte Bremswarnleuchte 12 mit einer ersten Kamera 17 und einer zweiten Kamera 18 dargestellt. Die erste Kamera 17 ist in einem ersten Randbereich 40 und die zweite Kamera 18 in einem zweiten Randbereich 41 der dritten Bremswarnleuchte 12 angeordnet. Die Randbereiche 40, 41 sind an entgegengesetzten Seiten der leuchtenden Fläche 15 angeordnet. Die Randbereiche 40, 41 sind vorzugsweise schwarz ausgeführt und verdecken die erste und die zweite Kamera 17, 18 bis auf das sichtbare Objektiv, dass sich durch die Schwarzfärbung der Randbereiche 40, 41 kaum von den Randbereichen 40, 41 abhebt. Die leuchtende Fläche ist vorzugsweise als eine rotgefärbte, lichtstreuende Kunststoffscheibe ausgeführt.

In der Figur 3b ist eine Anordnungsmöglichkeit einer Kameravorrichtung 50 in einer Ausbuchtung 52 eines Gehäuses einer dritten Bremswarnleuchte 53 mit einer leuchtenden Fläche 51 dargestellt. Die dritte Bremswarnleuchte 53 ist durch die Ausbuchtung 52 an einer dem Fahrzeugdach 14 abgewandten Seite nach unten hin erweitert und trägt die Kameravorrichtung 50. Die Ausbuchtung 52 ist ebenfalls vorzugsweise schwarz gefärbt.

In der Figur 3c ist an einer dritten Bremswarnleuchte 59 eine Kameravorrichtung 60 hinter einer leuchtenden Fläche 61 angeordnet. Die Kameravorrichtung 60 beobachtet den rückwärtigen Fahrraum durch die leuchtende Fläche 61. Zumindest im Bereich der Kameravorrichtung 60 darf die leuchtende Fläche 61 nicht lichtstreuend ausgeführt sein, um eine Beeinflussung des in der Anzeigeeinheit 5 darzustellenden Bildes durch eine Lichtstreuung zu vermeiden. Erfolgt eine Bilddarstellung in der Anzeigeeinheit 5 schwarz-weiß, kann eine Beeinflussung durch eine Einfärbung der leuchtenden Fläche 61 nicht erfolgen.

In der Figur 4 ist ein Schnitt in seitlicher Ansicht durch die dritte Bremswarnleuchte 12 in der Figur 3a entlang der gestrichelten Linie I-II dargestellt. An der Heckscheibe 2 ist die erste Kamera 17 bestehend aus einem Objektiv 70 und einer Auswerteeinrichtung 71 angeordnet. Die Auswerteeinrichtung 71 und das Objektiv 70 befinden sich in einem Gehäuse 72. Die Auswerteeinrichtung 71 ist an Leitungen 16' angeschlossen, die als Teil der Leitungen 16 aus dem Gehäuse 72 zu der Anzeigeeinheit 5 geführt sind. Das Gehäuse 72 ist vorzugsweise aus einem Kunststoffmaterial gefertigt und trägt die erste Kamera 17 mit dem Objektiv 70 und der Auswerteeinrichtung 71. Das Objektiv 70 ist in einem bevorzugten Ausführungsbeispiel nach unten auf die Fahrbahn 22 gerichtet, um eine Überwachung des nahe am Fahrzeug liegenden Fahrraums zu gewährleisten. Das Objektiv 70 ist vorzugsweise als ein Weitwinkelobjektiv ausgeführt. Die Auswerteeinrichtung 71 ermöglicht eine elektronische Erfassung des durch das Objektiv 70 erzeugten Bildes, vorzugsweise durch einen CCD-Chip oder durch einen CMOS-Chip. Hierbei ist es möglich, durch die Auswerteeinheit anstelle sichtbaren Lichts Licht im Infrarotbereich zu erfassen, wodurch auch eine Beobachtung des rückwärtigen Fahrraums bei Nacht oder bei Nebel möglich ist. In einem bevorzugten Ausführungsbeispiel erfolgt die Wandlung von Licht in ein elektrisches Signal mittels einer nichtlinearen Wandelkennlinie, durch die einer Helligkeit eine Spannung zugewiesen wird. Durch eine derartige sogenannte hochdynamische Kamera ist eine Anpassung einer Bildhelligkeit auch bei starken Helligkeitsschwankungen möglich. Eine leuchtende Fläche sowie Beleuchtungsmittel der dritten Bremswarnleuchte sind in der Figur 4 nicht dargestellt. Der Randbereich 40, in den das Objektiv 70 eingepasst ist, ist angeschrägt und an die Heckscheibe 2 angepasst, sodass das Gehäuse 72 der dritten Bremswarnleuchte 12 bündig an die Heckscheibe 2 anschließt. In einem bevorzugten Ausführungsbeispiel ist das Gehäuse 72 über den Randbereich 40 an die Heckscheibe 2 geklebt.

In der Figur 5 ist ein Längsschnitt durch die dritte Bremswarnleuchte 12 in einer Aufsicht entlang der gestrichelten Linie III-IV in der Figur 3a dargestellt. Ein angeschrägter Bereich 74 der dritten Bremswarnleuchte 12 ist an den Verlauf der Heckscheibe 2 angepasst. Die erste Kamera 17 und die zweite Kamera 18 sind an entgegengesetzten Seiten der leuchtenden Fläche 15 angeordnet. Ferner ist neben der Auswerteeinrichtung 71 und dem Objektiv 70 der ersten Kamera 17 auch ein Objektiv 80 und eine Auswerteeinrichtung 81 der zweiten Kamera 18 dargestellt. Hinter der leuchtenden Fläche 15 ist eine Matrix aus Leuchtdioden 90 angeordnet. Die Matrix aus Leuchtdioden 90 ist an einer Leiterplatte 91 befestigt, über die eine Spannungsmessung erfolgt. Durch einen Deckel 92, der aus dem Gehäuse 72 der dritten Bremswarnleuchte 12 entnommen werden kann, ist ein Austausch der Komponenten in der dritten Bremswarnleuchte 12 möglich. Anstelle der Matrix aus Leuchtdioden 90 ist auch die Verwendung einer Neonentladungslichtquelle möglich.

In der Figur 6 ist ein Schaltbild der dritten Bremswarnleuchte 12 dargestellt. Von einem Generator 100, z. B. der Fahrzeugbatterie, wird eine Gleichspannung zu einem Spannungswandler 101 geleitet. Eine Ausgangsspannung des Spannungswandlers 101 wird in einer Parallelschaltung über Versorgungsleitungen 110 zu der Matrix aus Leuchtdioden 90, zu der ersten Kamera 17 und zu der zweiten Kamera 18 geführt. Die Stromversorgung der Matrix aus Leuchtdioden 90 wird über eine erste Steuerleitung 103 gesteuert, die auf einen vorzugsweise in dem Gehäuse 72 der dritten Bremswarnleuchte 12 angeordneten Schalter 104 wirkt. Über eine zweite Steuerleitung 105 ist die erste Kamera 17 und über eine dritte Steuerleitung 106 ist die zweite Kamera 18 aktivierbar. Über eine erste Auswerteleitung 107 und über eine zweite Auswerteleitung 108 ist ein Ausgangssignal der ersten und/oder zweiten Kamera 17, 18 zu einer Auswerteeinheit 109 weiterleitbar. In der Auswerteeinheit 109 werden die ermittelten Bildsignale für eine Darstellung in der Anzeigeeinheit 5 aufbereitet. Sind insbesondere beide Kameras 17, 18 aktiv, so erfolgt in einem bevorzugten Ausführungsbeispiel eine stereoskopische Bildauswertung, bei der z. B. die Entfernung zu einzelnen, von den Kameras erfassten Hindernissen in der Anzeigeeinheit 5 dargestellt wird. Die Anzeigeeinheit 5 ist vorzugsweise als eine Flüssigkristallanzeige ausgeführt und vorzugsweise in einer Mittelkonsole des Fahrzeugs angeordnet. Sie kann auch vor einem Fahrer in dem Fahrzeug angeordnet sein. Die Auswerteeinheit 109 befindet sich vorzugsweise in einem Dashboard des Kraftfahrzeugs 1 und ist für einen Fahrgast im Kraftfahrzeug 1 nicht sichtbar. Die Leitungen, also die Versorgungsleitungen 110, die Steuerleitungen 103, 105, 106 und die Auswerteleitungen 107, 108 werden durch das Fahrzeugdach 14 geführt und sind ebenfalls für einen Fahrgast im Kraftfahrzeug 1 nicht sichtbar. Eine Spannungsversorgung der Matrix aus Leuchtdioden 90, der ersten Kamera 17 und der zweiten Kamera 18 erfolgt bevorzugt über die gleichen Versorgungsleitungen 110. Der Spannungswandler 101 ist bevorzugt im Fahrzeugdach 14 angeordnet und wandelt die von dem Generator 100 gelieferte Spannung vorzugsweise zunächst in eine Wechselspannung, transformiert diese auf eine niedrigere Spannung und wandelt diese zurück in eine Gleichspannung. Hierdurch ist es möglich, einen Spannungswandler 101, der vorzugsweise eine Gleichspannung in einem Bereich zwischen 4 und 8 Volt erzeugt, sowohl zur Versorgung der Matrix aus Leuchtdioden 90 als auch der ersten Kamera 17 und der zweiten Kamera 18 zu verwenden.

## Patentansprüche

1. Fahrzeug mit einer Kameravorrichtung zur Überwachung des rückwärtigen Fahrraums des Fahrzeugs, wobei an dem Fahrzeug (1) mindestens drei Bremswarnleuchten (10, 10', 12, 23, 30, 53, 59) angeordnet sind, wobei die dritte Bremswarnleuchte (12, 23, 30, 52, 59) einen größeren Abstand zu einem Fahrweg (22) des Fahrzeugs (1) aufweist als die erste und die zweite Bremswarnleuchte (10, 10'), wobei die Kameravorrichtung (17, 18, 21, 31, 50, 60) an der dritten Bremswarnleuchte (12, 23, 30, 53, 59) angeordnet ist, wobei die dritte Bremswarnleuchte (12, 23, 30, 53, 59) und die Kameravorrichtung (17, 18, 21, 31, 50, 60) im Bereich einer Heckscheibe (2) des Fahrzeugs (1) angeordnet sind, **dadurch gekennzeichnet, dass** an der Heckscheibe (2) ein Scheibenwischer (19) angeordnet ist, dass ein Bereich der Heckscheibe (2) vor der Kameravorrichtung (17, 18, 21, 31, 50, 60) an der Heckscheibe (2) durch den Scheibenwischer (19) reinigbar ist und dass eine Spritzdüse (25) zum Aufbringen von Reinigungsflüssigkeit und/oder der Scheibenwischer (19) zum Reinigen der Heckscheibe im Bereich der Kameravorrichtung automatisch auslösbar sind.

2. Fahrzeug nach Anspruch 1, **dadurch gekennzeichnet, dass** der Scheibenwischer (19) und/oder die Spritzdüse (25) mit einem Einlegen eines Rückwärtsganges und/oder mit einer Aktivierung der Kameravorrichtung (17, 18, 21, 31, 50, 60) auslösbar sind.

3. Fahrzeug nach einem der vorherigen Ansprüche, **dadurch gekennzeichnet, dass** durch eine Unterdrückungsvorrichtung für eine vorgegebene Zeit ein erneutes Auslösen des Scheibenwischers (19) und/oder der Spritzdüse (25) sprerrbar ist.

4. Fahrzeug nach einem der vorherigen Ansprüche, **dadurch gekennzeichnet, dass** der Scheibenwischer (19) und/oder die Spritzdüse (25) automatisch bei einer Verschlechterung des von der Kameravorrichtung (17, 18, 21, 31, 50, 60) erfassten Bildes auslösbar sind.

5. Fahrzeug nach einem der vorherigen Ansprüche **dadurch gekennzeichnet, dass** ein Sensor zur Messung der Reflexion des Bremslichtes an der Heckscheibe angeordnet ist und dass der Scheibenwischer in Abhängigkeit von der Reflexion auslösbar ist.

6. Fahrzeug nach einem der vorhergehenden Ansprüche, **dadurch gekennzeichnet, dass** die dritte Bremswarnleuchte (12, 23, 30, 53, 59) und die Kameravorrichtung (17, 18, 21, 31, 50, 60) in einem Gehäuse (72) angeordnet sind.

7. Fahrzeug nach Anspruch 6, **dadurch gekennzeichnet, dass** die Spritzdüse (25) und/oder der Scheibenwischer an dem Gehäuse angeordnet ist.

8. Fahrzeug nach einem der vorhergehenden Ansprüche, **dadurch gekennzeichnet, dass** die dritte Bremswarnleuchte (12, 23, 30, 53, 59) und die Kameravorrichtung (17,18, 21, 31, 50, 60) an eine gemeinsame Spannungsversorgung (16, 110) angeschlossen sind.

9. Fahrzeug nach Anspruch 8, **dadurch gekennzeichnet, dass** die Betriebsspannung der gemeinsamen Spannungsversorgung (16, 110) gegenüber der Bordspannung in dem Fahrzeug (1) reduziert ist und vorzugsweise in einem Bereich von 4 Volt bis 8 Volt vorgesehen ist.

10. Fahrzeug nach einem der vorhergehenden Ansprüche, **dadurch gekennzeichnet, dass** ein von der Kameravorrichtung (17, 18, 21, 31, 50, 60) erfasstes Bild in einer Anzeigeeinheit (5) im Fahrzeug (1) vorzugsweise dem Fahrer anzeigbar ist.

11. Fahrzeug nach einem der vorhergehenden Ansprüche, **dadurch gekennzeichnet, dass** an der dritten Bremswarnleuchte (12) eine zweite Kameravorrichtung (18) angeordnet ist, dass von der ersten und der zweiten Kameravorrichtung (17, 18) aufgenommene Bildsignale einer Auswerteeinheit (109) zuführbar sind und dass von der Auswerteeinheit (109) eine stereoskopische Bildauswertung der von der ersten und der zweiten Kameravorrichtung (17,18) erfassten Bilder durchführbar ist.

12. Fahrzeug nach einem der vorhergehenden Ansprüche, **dadurch gekennzeichnet, dass** die Kameravorrichtung (17, 18, 21, 31, 50, 60) eine CCD-Kamera und/oder eine CMOS Kamera ist.

13. Fahrzeug nach einem der vorhergehenden Ansprüche, **dadurch gekennzeichnet, dass** die Wandelkennlinie der Kameravorrichtung (17, 18, 21, 31, 50, 60) eine nichtlineare Wandelkennlinie ist und dass eine Steigung der Wandelkennlinie mit zunehmendem Lichteinfall abnimmt.

14. Verfahren zur Überwachung des rückwärtigen Fahrraums eines Fahrzeugs mit einer Kameravorrichtung, wobei an dem Fahrzeug (1) mindestens drei Bremswarnleuchten (10, 10', 12, 23, 30, 53, 59) angeordnet sind, wobei die dritte Bremswarnleuchte (12, 23, 30, 52, 59) einen größeren Abstand zu einem Fahrweg (22) des Fahrzeugs (1) aufweist als die erste und die zweite Bremswarnleuchte (10, 10'), wobei die Kameravorrichtung (17, 18, 21, 31, 50, 60) an der dritten Bremswarnleuchte (12, 23, 30, 53, 59) angeordnet ist, wobei die dritte Bremswarnleuchte (12, 23, 30, 53, 59) und die Kameravorrichtung (17, 18, 21, 31, 50, 60) im Bereich einer Heckscheibe (2) des Fahrzeugs (1) angeordnet sind, **dadurch gekennzeichnet, dass** an der Heckscheibe (2) ein Scheibenwischer (19) angeordnet ist, dass ein Bereich der Heckscheibe (2) vor der Kameravorrichtung (17, 18, 21, 31, 50, 60) an der Heckscheibe (2) durch den Scheibenwischer (19) gereinigt wird und dass eine Spritzdüse (25) zum Aufbringen von Reinigungsflüssigkeit und/oder der Scheibenwischer (19) zum Reinigen der Heckscheibe im Bereich der Kameravorrichtung automatisch ausgelöst werden.

15. Verfahren nach Anspruch 14, **dadurch gekennzeichnet, dass** der Scheibenwischer (19) und/oder die Spritzdüse (25) mit einem Einlegen eines Rückwärtsganges und/oder mit einer Aktivierung der Kameravorrichtung (17, 18, 21, 31, 50, 60) ausgelöst werden.

16. Verfahren nach einem der Ansprüche 14-15, **dadurch gekennzeichnet, dass** durch eine Unterdrückungsvorrichtung für eine vorgegebene Zeit ein erneutes Auslösen des Scheibenwischers (19) und/oder der Spritzdüse (25) gesperrt werden.

17. Verfahren nach einem der Ansprüche 14-16, **dadurch gekennzeichnet, dass** der Scheibenwischer (19) und/oder die Spritzdüse (25) automatisch bei einer Verschlechterung des von der Kameravorrichtung (17, 18, 21, 31, 50, 60) erfassten Bildes ausgelöst werden.

18. Verfahren nach einem der Ansprüche 14-17, **dadurch gekennzeichnet, dass** ein Sensor zur Messung der Reflexion des Bremslichtes an der Heckscheibe angeordnet ist und dass der Scheibenwischer in Abhängigkeit von der Reflexion ausgelöst wird.

19. Verfahren nach einem der Ansprüche 14-18, **dadurch gekennzeichnet, dass** ein von der Kameravorrichtung (17, 18, 21, 31, 50, 60) erfasstes Bild in einer Anzeigeeinheit (5) im Fahrzeug (1) vorzugsweise dem Fahrer angezeigt wird.

20. Verfahren nach einem der Ansprüche 14-19, **dadurch gekennzeichnet, dass** an der dritten Bremswarnleuchte (12) eine zweite Kameravorrichtung (18) angeordnet ist, dass von der ersten und der zweiten Kameravorrichtung (17, 18) aufgenommene Bildsignale einer Auswerteeinheit (109) zugeführt werden und dass von der Auswerteeinheit (109) eine stereoskopische Bildauswertung der von der ersten und der zweiten Kameravorrichtung (17, 18) erfassten Bilder durchgeführt wird.

## Claims

1. Vehicle having a camera device for monitoring the rear of the passenger compartment of the vehicle, wherein at least three brake warning lights (10, 10', 12, 23, 30, 53, 59) are arranged on the vehicle (1), wherein the third brake warning light (12, 23, 30, 52, 59) is at a larger distance from a travel path (22) of the vehicle (1) than the first and second brake warning lights (10, 10'), wherein the camera device (17, 18, 21, 31, 50, 60) is arranged on the third brake warning light (12, 23, 30, 53, 59), wherein the third brake warning light (12, 23, 30, 53, 59) and the camera device (17, 18, 21, 31, 50, 60) are arranged in the vicinity of a rear window (2) of the vehicle (1), **characterized in that** a window wiper (19) is arranged on the rear window (2), **in that** a region of the rear window (2) in front of the camera device (17, 18, 21, 31, 50, 60) on the rear window (2) can be cleaned by the window wiper (19), and **in that** a spray nozzle (25) can be triggered automatically in order to apply cleaning fluid and/or the window wiper (19) can be triggered automatically in order to clean the rear window in the region of the camera device.

2. Vehicle according to Claim 1, **characterized in that** the window wiper (19) and/or the spray nozzle (25) can be triggered when a reverse gear is engaged and/or when the camera device (17, 18, 21, 31, 50, 60) is actuated.

3. Vehicle according to one of the preceding claims, **characterized in that** a suppression device can prevent renewed triggering of the window wiper (19) and/or of the spray nozzle (25) for a predefined time.

4. Vehicle according to one of the preceding claims, **characterized in that** the window wiper (19) and/or the spray nozzle (25) can be triggered automatically when the image captured by the camera device (17, 18, 21, 31, 50, 60) becomes worse.

5. Vehicle according to one of the preceding claims, **characterized in that** a sensor for measuring the reflection of the brake light is arranged on the rear window, and **in that** the window wiper can be triggered as a function of the reflection.

6. Vehicle according to one of the preceding claims **characterized in that** the third brake warning light (12, 23, 30, 53, 59) and the camera device (17, 18, 21, 31, 50, 60) are arranged in a housing (72).

7. Vehicle according to Claim 6, **characterized in that** the spray nozzle (25) and/or the window wiper are arranged on the housing.

8. Vehicle according to one of the preceding claims, **characterized in that** the third brake warning light (12, 23, 30, 53, 59) and the camera device (17, 18, 21, 31, 50, 60) are connected to a common voltage supply (16, 110).

9. Vehicle according to Claim 8, **characterized in that** the operating voltage of the common voltage supply (16, 110) is reduced in comparison with the voltage of the on-board electrical system in the vehicle (1) and is preferably provided in a range from 4 volts to 8 volts.

10. Vehicle according to one of the preceding claims, **characterized in that** an image captured by the camera device (17, 18, 21, 31, 50, 60) can preferably be displayed to the driver on a display unit (5) in the vehicle (1).

11. Vehicle according to one of the preceding claims, **characterized in that** a second camera device (18) is arranged on the third brake warning light (12), **in that** image signals recorded by the first and second camera devices (17, 18) can be fed to an evaluation unit (109), and **in that** the evaluation unit (109) can carry out a stereoscopic image evaluation of the images captured by the first and second camera devices (17, 18).

12. Vehicle according to one of the preceding claims, **characterized in that** the camera device (17, 18, 21, 31, 50, 60) is a CCD camera and/or a CMOS camera.

13. Vehicle according to one of the preceding claims, **characterized in that** the conversion characteristic of the camera (17, 18, 21, 31, 50, 60) is a non-linear conversion characteristic, and **in that** a gradient of the conversion characteristic decreases as the incident light increases.

14. Method for monitoring the rear of the passenger compartment of a vehicle, wherein at least three brake warning lights (10, 10', 12, 23, 30, 53, 59) are arranged on the vehicle (1), wherein the third brake warning light (12, 23, 30, 52, 59) is at a larger distance from a travel path (22) of the vehicle (1) than the first and second brake warning lights (10, 10'), wherein the camera device (17, 18, 21, 31, 50, 60) is arranged on the third brake warning light (12, 23, 30, 53, 59), wherein the third brake warning light (12, 23, 30, 53, 59) and the camera device (17, 18, 21, 31, 50, 60) are arranged in the vicinity of a rear window (2) of the vehicle (1), **characterized in that** a window wiper (19) is arranged on the rear window (2), **in that** region of the rear window (2) in front of the camera device (17, 18, 21, 31, 50, 60) on the rear window (2) can be cleaned by the window wiper (19), and **in that** a spray nozzle (25) can be triggered automatically in order to apply cleaning fluid and/or the window wiper (19) can be triggered automatically in order to clean the rear window in the region of the camera device.

15. Method according to Claim 14, **characterized in that** the window wiper (19) and/or the spray nozzle (25) are triggered when a reverse gear is engaged and/or when the camera device (17, 18, 21, 31, 50, 60) is actuated.

16. Method according to one of Claims 14-15, **characterized in that** a suppression device prevents renewed triggering of the window wiper (19) and/or of the spray nozzle (25) for a predefined time.

17. Method according to one of Claims 14-16, **characterized in that** the window wiper (19) and/or the spray nozzle (25) are triggered automatically when the image captured by the camera device (17, 18, 21, 31, 50, 60) becomes worse.

18. Method according to one of Claims 14-17, **characterized in that** a sensor for measuring the reflection of the brake light is arranged on the rear window, and **in that** the window wiper is triggered as a function of the reflection.

19. Method according to one of Claims 14-18, **characterized in that** an image captured by the camera device (17, 18, 21, 31, 50, 60) is preferably displayed to the driver on a display unit (5) in the vehicle (1).

20. Method according to one of Claims 14-19, **characterized in that** a second camera device (18) is arranged on the third brake warning light (12), **in that** image signals recorded by the first and second camera devices (17, 18) are fed to an evaluation unit (109), and **in that** the evaluation unit (109) carries out a stereoscopic image evaluation of the images captured by the first and second camera devices (17, 18).

## Revendications

1. Véhicule comprenant un dispositif de caméra pour surveiller l'espace intérieur arrière du véhicule, dans lequel au moins trois lampes d'avertissement de freinage (10, 10', 12, 23, 30, 53, 59) sont installées sur le véhicule (1), la troisième lampe d'avertissement de freinage (12, 23, 30, 52, 59) présente une plus grande distance par rapport à une trajectoire (22) du véhicule (1) que les première et deuxième lampes d'avertissement de freinage (10, 10'), le dispositif de caméra (17, 18, 21, 31, 50, 60) est disposé sur la troisième lampe d'avertissement de freinage (12, 23, 30, 53, 59), la troisième lampe d'avertissement de freinage (12, 23, 30, 53, 59) et le dispositif de caméra (17, 18, 21, 31, 50, 60) étant disposés dans la zone d'une vitre arrière (2) du véhicule (1),
**caractérisé en ce qu'**
un essuie-glace (19) est disposé sur la vitre arrière (2), une zone de la vitre arrière (2) située devant le dispositif de caméra (17, 18, 21, 31, 50, 60) sur la vitre arrière (2) peut être nettoyée par l'essuie-glace (19), et une buse d'éjection (25) pour appliquer un liquide de nettoyage et/ou l'essuie-glace (19) peuvent être déclenchés automatiquement afin de nettoyer la vitre arrière dans la zone du dispositif de caméra.

2. Véhicule selon la revendication 1,
**caractérisé en ce que**
l'essuie-glace (19) et/ou la buse d'éjection (25) peuvent être déclenchés en passant la marche arrière et/ou en activant le dispositif de caméra (17, 18, 21, 31, 50, 60).

3. Véhicule selon l'une quelconque des revendications précédentes,
**caractérisé en ce qu'**
un nouveau déclenchement de l'essuie-glace (19) et/ou de la buse d'éjection (25) peut être bloqué pour une durée prédéterminée par un dispositif d'inhibition.

4. Véhicule selon l'une quelconque des revendications précédentes,
**caractérisé en ce que**
l'essuie-glace (19) et/ou la buse d'éjection (25) peuvent être déclenchés automatiquement lors d'une altération de l'image saisie par le dispositif de caméra (17, 18, 21, 31, 50, 60).

5. Véhicule selon l'une quelconque des revendications précédentes,
**caractérisé en ce qu'**
un capteur est disposé sur la vitre arrière pour mesurer la réflexion de la lumière de freinage, et l'essuie-glace peut être déclenché en fonction de la réflexion.

6. Véhicule selon l'une quelconque des revendications précédentes,
**caractérisé en ce que**
la troisième lampe d'avertissement de freinage (12, 23, 30, 53, 69) et le dispositif de caméra (17, 18, 21, 31, 50, 60) sont disposés dans un boîtier (72).

7. Véhicule selon la revendication 6,
**caractérisé en ce que**
la buse d'éjection (25) et/ou l'essuie-glace sont disposés sur le boîtier.

8. Véhicule selon l'une quelconque des revendications précédentes,
**caractérisé en ce que**
la troisième lampe d'avertissement de freinage (12, 23, 30, 53, 59) et le dispositif de caméra (17, 18, 21, 31, 50, 60) sont raccordés à une alimentation en tension commune (16, 110).

9. Véhicule selon la revendication 8,
**caractérisé en ce que**
la tension de service de l'alimentation en tension commune (16, 110) est réduite par rapport à la tension de bord dans le véhicule (1) et prévue de préférence entre 4 Volts et 8 Volts.

10. Véhicule selon l'une quelconque des revendications précédentes,
**caractérisé en ce qu'**
une image saisie par le dispositif de caméra (17, 18, 21, 31, 50, 60) peut être visualisée de préférence par le conducteur sur une unité d'affichage (5) dans le véhicule (1).

11. Véhicule selon l'une quelconque des revendications précédentes,
**caractérisé en ce qu'**
un deuxième dispositif de caméra (18) est disposé sur la troisième lampe d'avertissement de freinage (12), des signaux d'image saisis par les premier et deuxième dispositifs de caméra (17, 18) peuvent être transmis à une unité d'exploitation (109), et l'unité d'exploitation (109) peut effectuer une exploitation d'image stéréoscopique des images saisies par les premier et deuxième dispositifs de caméra (17, 18).

12. Véhicule selon l'une quelconque des revendications précédentes,
**caractérisé en ce que**
le dispositif de caméra (17, 18, 21, 31, 50, 60) est une caméra CCD et/ou une caméra CMOS.

13. Véhicule selon l'une quelconque des revendications précédentes,
**caractérisé en ce que**
la courbe caractéristique de conversion du dispositif de caméra (17, 18, 21, 31, 50, 60) est une courbe caractéristique de conversion non linéaire, et une pente de la courbe caractéristique de conversion diminue à mesure que l'incidence de la lumière augmente.

14. Procédé de surveillance de l'espace intérieur arrière d'un véhicule à l'aide d'un dispositif de caméra, dans lequel au moins trois lampes d'avertissement de freinage (10, 10', 12, 23, 30, 53, 59) sont installées sur le véhicule (1), la troisième lampe d'avertissement de freinage (12, 23, 30, 52, 59) présente une plus grande distance par rapport à une trajectoire (22) du véhicule (1) que les première et deuxième lampes d'avertissement de freinage (10, 10'), le dispositif de caméra (17, 18, 21, 31, 50, 60) est disposé sur la troisième lampe d'avertissement de freinage (12, 23, 30, 53, 59), et la troisième lampe d'avertissement de freinage (12, 23, 30, 53, 59) et le dispositif de caméra (17, 18, 21, 31, 50, 60) étant disposés dans la zone d'une vitre arrière (2) du véhicule (1),
**caractérisé en ce qu'**
un essuie-glace (19) disposé sur la vitre arrière (2) nettoie une zone de la vitre arrière (2) située devant le dispositif de caméra (17, 18, 21, 31, 50, 60) sur la vitre arrière (2), et une buse d'éjection (25) pour appliquer un liquide de nettoyage et/ou l'essuie-glace (19) sont déclenchés automatiquement afin de nettoyer la vitre arrière dans la zone du dispositif de caméra.

15. Procédé selon la revendication 14,
**caractérisé en ce que**
l'essuie-glace (19) et/ou la buse d'éjection (25) sont déclenchés en passant la marche arrière et/ou en activant le dispositif de caméra (17, 18, 21, 31, 50, 60).

16. Procédé selon l'une quelconque des revendications 14 à 15,
**caractérisé en ce qu'**
un nouveau déclenchement de l'essuie-glace (19) et/ou de la buse d'éjection (25) est bloqué pour une durée prédéterminée par un dispositif d'inhibition.

17. Procédé selon l'une quelconque des revendications 14 à 16,
**caractérisé en ce que**
l'essuie-glace (19) et/ou la buse d'éjection (25) sont déclenchés automatiquement lors d'une altération de l'image saisie par le dispositif de caméra (17, 18, 21, 31, 50, 60).

18. Procédé selon l'une quelconque des revendications 14 à 17,
**caractérisé en ce qu'**
un capteur est disposé sur la vitre arrière pour mesurer la réflexion de la lumière de freinage, et l'essuie-glace est déclenché en fonction de la réflexion.

19. Procédé selon l'une quelconque des revendications 14 à 18,
**caractérisé en ce qu'**
une image saisie par le dispositif de caméra (17, 18, 21, 31, 50, 60) est visualisée de préférence par le conducteur sur une unité d'affichage (5) dans le véhicule (1).

20. Procédé selon l'une quelconque des revendications 14 à 19,
**caractérisé en ce qu'**
un deuxième dispositif de caméra (18) est disposé sur la troisième lampe d'avertissement de freinage (12), des signaux d'image saisis par les premier et deuxième dispositifs de caméra (17, 18) sont transmis à une unité d'exploitation (109), et l'unité d'exploitation (109) effectue une exploitation d'image stéréoscopique des images saisies par les premier et deuxième dispositifs de caméra (17, 18).
